# EUROPEAN PATENT APPLICATION

(11) **EP 2 942 361 A1**
(43) Date of publication of application: **11.11.2015**
(21) Application number: 14167094.3
(22) Date of filing: 06.05.2014
(51) Int. Cl.: C08G 18/67, C08G 18/08, C09D 175/16

(54) **Grain enhancement with surfactants in water-based uv-radiation curable polyurethane dispersions**

(71) Applicant: BASF SE, 67056 Ludwigshafen (DE)
(72) Inventor: Roller, Sebastian, 68167 Mannheim (DE); Burkhardt, Uwe, 67063 Ludwigshafen (DE)

(57) **Abstract**

The present invention relates to aqueous polyurethane dispersions that comprise selected nonionic dispersing agents selected from the group consisting of ethoxylated triglyceride; alkylpoly-ethylene glycol ether of a linear, saturated C₁₆-C₁₈ fatty alcohol; and a linear, saturated C₁₂-C₁₄alcohol etherified with a poly-C₂-C₃alkoxy ether. The dispersions are UV-radiation curable and are useful for the preparation of grain enhanced coating compositions.

## Description

The present invention relates to aqueous polyurethane dispersions that are curable with UV radiation, to a process for preparing them, and to the use thereof.

For the coating of wood materials, as in the furniture industry, for instance, radiation-curable polyurethanes are widespread. In addition to requirements such as high hardness, coatings in the furniture industry are required in particular to emphasize the visibility of wood structure, an effect referred to as "grain enhancement" or "grain highlighting".

Water-dispersible, radiation-curable polyurethanes are known from EP 753 531*,* for example, in which urethane acrylates are prepared on the basis of polyester acrylates, and EP 942 022, in which urethane acrylates are prepared on the basis of pre-polymers containing acrylate groups. The polyurethane acrylate dispersions described therein do not give sufficient visibility of the wood structure.

In particular, the examples of EP 753 531 show inferior grain enhancement, as demonstrated in EP 1 142 947*,* Example A therein, as Comparative Example.

Aqueous polyurethane dispersions with good grain enhancement are described in EP 1 142 947*,* for example. This effect is attributed to the incorporation of a particular monomer (the neopentyl glycol ester of hydroxypivalic acid). While the systems described therein do show significantly improved grain highlighting (Rating 2) over the prior art, there is still need for improvement relative to the Laromer® PE 55W polyester acrylate reference used (rating 0).

Another approach for the preparation of aqueous polyurethane dispersions with good grain enhancement is described in WO 2012/171 833*.* The dispersion contains particles of small particle size, particularly 30 nm, preferably 25 nm.

The preparation of these dispersions is technically difficult. A disadvantage is that these polyurethanes, after drying and before UV curing, exhibit a distinct tack.

It is an object of the present invention to provide suitable aqueous polyurethane dispersions in water, curable by UV radiation, which exhibit on wood based materials good performance properties, more particularly a good grain enhancement in combination with the known advantageous properties of radiation curable coatings, like, e.g., hardness etc.

The object is achieved by means of coating compositions that comprise selected non-ionic dispersing agents selected from the group consisting of ethoxylated triglyceride; alkylpolyethylene glycol ether of a linear, saturated C₁₆-C₁₈ fatty alcohol; and a linear, saturated C₁₂-C₁₄alcohol etherified with a poly-C₂-C₃alkoxy ether.

The invention relates to an aqueous radiation curable coating composition, which comprises:
A) A water-dispersible polyurethane component based on the constituents:
   A 1) At least one aliphatic, cycloaliphatic or aromatic di- or polyisocyanate;
   A 2) At least one compound having at least one group that is reactive toward isocyanate groups, and having at least one free-radically polymerizable C=C double bond;
   A 3) At least one compound having at least one group that is reactive toward isocyanate groups, and having at least one acid group;
   A 4) At least one basic compound suitable for neutralization or partial neutralization of the acid groups of the compound c); and
   A 5) A reactive component acting as photoinitiator or the decomposition product thereof;
B) At least one non-ionic dispersing agent selected from the group consisting of:
   B 1) Ethoxylated triglyceride;
   B 2) Alkylpolyethylene glycol ether of a linear, saturated C₁₆-C₁₈ fatty alcohol; and
   B 3) A linear, saturated C₁₂-C₁₄alcohol etherified with a poly-C₂-C₃alkoxy ether; and
C) Water.

The term aqueous radiation curable coating composition comprises within its scope the above-mentioned coating composition which is curable by exposure to UV-radiation. In that event, a reactive component A 5) acting as photoinitiator is present in the composition.

The term aqueous radiation curable coating composition also comprises within its scope the above-mentioned coating composition which has been subjected to UV-curing. In that event, the decomposition product of the reactive component A 5) is present in the composition, as cured.

In one preferred embodiment the polyurethane components, as defined above, have a double bond density of at least 1.5 mol/kg, preferably at least 1.8, more preferably at least 2.0, and very preferably 2.2 mol/kg.

In the compositions of the invention no isocyanate-functional compounds are used for preparing the polyurethanes, in which the isocyanate groups have been reacted in part or completely with what are called blocking agents. Blocking agents are compounds which convert isocyanate groups into blocked (capped or protected) isocyanate groups, which subsequently, below the temperature known as the de-blocking temperature, do not display the customary reactions of a free isocyanate group. Such compounds with blocked isocyanate groups, which are not used inventively, are commonly employed in dual-cure coating compositions which are cured to completion with the aid of isocyanate group curing. The polyurethane dispersions of the invention, following their preparation, preferably no longer contain essentially any free isocyanate groups: that is, in general, less than 1% by weight NCO, preferably less than 0.75%, more preferably less than 0.66%, and very preferably less than 0.3% by weight NCO (calculated with a molar weight of 42 g/mol).

The water-dispersible polyurethane component A) is based on the monomeric or oligomeric constituents:

### Constituent A1)

Constituent A1) consists of at least one, as for example one to three, preferably one to two, and more preferably exactly one aliphatic di- or polyisocyanate.

According to an alternative embodiment, Constituent A1) consists of at least one, as for example one to three, preferably one to two, and more preferably exactly one aromatic di- or polyisocyanate.

Constituent A1) preferably has an NCO content of 10% to 18%, preferably 12% to 16%, and more preferably 13% to 16% by weight and an average molecular weight of 600 to 1200, preferably 700 to 1000 and more preferably of 700 to 900 g/mol.

Aliphatic isocyanates are those which exclusively contain isocyanate groups attached to those carbon atoms which are part of linear or branched, acyclic chains, preferably those containing exclusively isocyanate groups which are attached to linear or branched, acylic chains and more preferably those which have isocyanate groups attached exclusively to linear or branched, acyclic hydrocarbon chains.

Aliphatic diisocyanates or polyisocyanates are preferably isocyanates having 4 to 20 C-atoms. Examples of customary diisocyanates are tetramethylene 1,4-diisocyanate, pentamethylene 1,5-diisocyanate, hexamethylene 1,6-diisocyanate, 2-methyl-1,5-diisocyanatopentane, oc-tamethylene 1,8-diisocyanate, decamethylene 1,10-diisocyanate, dodecamethylene 1,12-diisocyanate, tetradecamethylene 1,14-diisocyanate, 2,2,4- and 2,4,4-trimethylhexane diisocyanate, 1,3-bis(1-isocyanato-1-methylethyl)benzene (m-TMXDI), and derivatives of lysine diisocyanate. Mixtures of said diisocyanates may be present, too.

Preference is given to hexamethylene 1,6-diisocyanate and 2,2,4- and 2,4,4-trimethylhexane diisocyanate mixtures, more preferably to hexamethylene 1,6-diisocyanate.

2,2,4- And 2,4,4-trimethylhexane diisocyanate are present in the form, for example of a mixture in a ratio of 1.5 :1.0 to 1.0 :1.5, preferably 1.2 : 1.0 - 1.0 : 1.2, more preferably 1.1 : 1.0 - 1.0 : 1.1 and very preferably 1.0 : 1.0.

The polyisocyanates may be monomeric isocyanates having more than two isocyanate groups or oligomers of the abovementioned diisocyanates.

An example of the former is triisocyanatononane (4-isocyanatomethyloctane 1,8-diisocyanate) or 2'-isocyanatoethyl (2,6-diisocyanatohexanoate).

Examples of the latter are oligomers which contain isocyanurate, biuret, uretdione, allophanate, iminooxadiazinetrione and/or carbodiimide groups and which are obtainable by oligomerizing at least one, preferably exactly one, above-stated diisocyanate, more preferably by reaction of hexamethylene 1,6-diisocyanate.

Preferred polyisocyanates are oligomers containing isocyanurate, uretdione and/or allophanate groups, more preferably oligomers containing isocyanurate and/or allophanate groups, and, in one especially preferred embodiment, the compound a) is an oligomer which is based on hexamethylene 1,6-diisocyanate and contains allophanate groups, for which hexamethylene 1,6-diisocyanate is reacted with at least some of the compound b) to give an oligomer containing allophanate groups.

This reaction produces a compound having at least two free isocyanate groups, at least one allophanate group, and at least one free-radically polymerizable C=C double bond attached to the allophanate group, via its group that is reactive toward isocyanate groups.

Constituent A 1) comprises an amount of allophanate groups (calculated as C₂N₂HO₃: 101 g/mol) of 1% to 35%, preferably from 5% to 30%, more preferably from 10% to 35% by weight. The polyurethanes of the invention formed from the synthesis components a) to d) and also, optionally, f) and g) comprise 1% to 30%, preferably from 1% to 25%, more preferably from 2% to 20% by weight of allophanate groups. The component a) used inventively further comprises less than 5% by weight of uretdione.

Exemplified are oligomeric compounds as illustrated by the formula below:

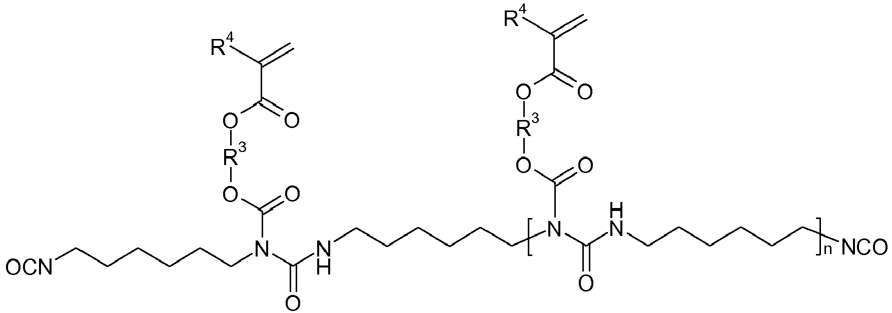

In which
R³ is a divalent aliphatic or cycloaliphatic, preferably aliphatic radical, preferably hydrocarbon radical, which has 2 to 12, preferably 2 to 8, and more preferably 2 to 4 carbon atoms,
R⁴ is hydrogen or methyl, preferably hydrogen, and
n is able on average to take on 0 or a positive number, preferably values from 0 to 5, more preferably 0.5 to 3 and very preferably 1 to 2.

Examples of R³ are 1,2-ethylene, 1,1-dimethyl-1,2-ethylene, 1,2-propylene, 1,3-propylene, 2-methyl-1,3-propylene, 2-ethyl-1,3-propylene, 2-butyl-2-ethyl-1,3-propylene, 2,2-dimethyl-1,3-propylene, 1,2-butylene, 1,3-butylene, 1,4-butylene, 1,5-pentylene, 1,6-hexylene, 2-ethyl-1,3-hexylene, 1,8-octylene, 2,4-diethyl-1,3-octylene or 1,10-decylene, preferably 1,2-ethylene, 1,2-propylene, 1,3-propylene or 1,4-butylene, more preferably 1,2-ethylene or 1,2-propylene and very preferably 1,2-ethylene.

Constituents A 1) are known or can be prepared by known methods, e.g. from *WO 00*/*39183 A1,* particularly Example 1.1. and the products 1 to 7 listed in Table 1 therein.

Some preferred examples are available commercially in the form of resins or aqueous dispersions, for example, under the trade mark designation Laromer® (BASF SE, Germany) LR 8949, UA 9064, UA 9060, LR 9005, LR 8983, or UA 9059.

According to an alternative embodiment, Constituent A1) consists of cycloaliphatic or aromatic, di- or polyisocyanates. Polyisocyanates present in Constituent A 1) do not include any polyisocyanates in which the isocyanate groups have been reacted with a blocking agent.

Such polyisocyanates have an NCO functionality of 2 to 4.5, more preferably 2 to 3.5. In another embodiment, Constituent A 1) is based on compounds which in addition to two or more isocyanate groups also have a group selected from the group consisting of urethane, urea, biuret, allophanate, carbodiimide, urethonimine, urethdione, and isocyanurate groups.

Cycloaliphatic isocyanates are those which have at least one isocyanate group that is connected to a carbon atom that is part of a fully saturated ring system, preferably those which have at least one isocyanate group that is bonded to a carbon atom that is part of a nonaromatic carbocyclic group.

Aromatic isocyanates are those which have at least one isocyanate group which is connected to a carbon atom which is part of an aromatic group.

Examples of cycloaliphatic diisocyanates are 1,4-, 1,3-, or 1,2-diisocyanatocyclohexane, 4,4'- or 2,4'-di(isocyanatocyclohexyl)methane, isophorone diisocyanate, 1,3- or 1,4-bis(isocyanatomethyl)cyclohexane, 2,4- and 2,6-diisocyanato-1-methylcyclohexane. Examples of aromatic diisocyanates are 2,4- or 2,6-tolylene diisocyanate, m- or p-xylylene diisocyanate, 2,4'- or 4,4'-diisocyanatodiphenylmethane, 1,3- or 1,4-phenylene diisocyanate, 1-chloro-2,4-phenylene diisocyanate, 1,5-naphthylene diisocyanate, diphenylene 4,4'-diisocyanate, 4,4'-diisocyanato-3,3'-dimethyldiphenyl diisocyanate, 3-methyldiphenylmethane 4,4'-diisocyanate, and diphenyl ether 4,4'-diisocyanate. Mixtures of the above-mentioned diisocyanates may be present.

Preferred Examples as Constituent A 1) are isophorone diisocyanate, 4,4' or 2,4' - di(isocyanatocyclohexyl)methane, their isocyanurates, biurets, and mixtures thereof.

Constituents A 1) based on cycloaliphatic or aromatic, di- or polyisocyanates are known or can be prepared by known methods. Some preferred examples are available commercially in the form of resins or aqueous dispersions, for example, under the trade mark designation Laromer® (BASF SE, Germany) LR 8963, 9005 or 9060.

### Constituent A 2

Constituent A 2) is defined as a compound having at least one group that is reactive toward isocyanate groups, and at least one free-radically polymerizable C=C double bond.

Constituent A 2) consists of a group of at least one, preferably one to three, more preferably one or two, and very preferably exactly one compound having at least one, as for example one or two, preferably exactly one group that is reactive toward isocyanate groups, and having at least one, as for example one to three, preferably one or two, and very preferably exactly one free-radically polymerizable C=C double bond.

Compounds having free-radically polymerizable C=C double bonds are vinyl ether, acrylate or methacrylate groups, preferably acrylate or methacrylate groups, and more preferably acrylate groups.

Preferred Constituents A 2) are, for example the esters of dihydric or polyhydric alcohols with α,β-ethylenically unsaturated monocarboxylic and/or dicarboxylic acids and their anhydrides, in which at least one hydroxy group remains unreacted.

Examples of α,β-ethylenically unsaturated monocarboxylic and/or dicarboxylic acids and their anhydrides that can be used include acrylic acid, methacrylic acid, fumaric acid, maleic acid, maleic anhydride, crotonic acid, itaconic acid, etc. It is preferred to use acrylic acid and methacrylic acid, more preferably acrylic acid.

Examples of suitable dihydric or polyhydric alcohols are diols such as ethylene glycol, 1,2-propanediol, 1,3-propanediol, 1,1-dimethylethane-1,2-diol, 2-butyl-2-ethyl-1,3-propanediol, 2-ethyl-1,3-propanediol, 2-methyl-1,3-propanediol, neopentyl glycol, neopentyl glycol hydroxypivalate, 1,2-, 1,3- or 1,4-butanediol, 1,6-hexanediol, 1,10-decanediol, bis(4-hydroxycyclohexane)isopropylidene, tetramethylcyclobutanediol, 1,2-, 1,3- or 1,4-cyclohexanediol, cyclooctanediol, norbornanediol, pinanediol, decalindiol, 2-ethyl-1,3-hexanediol, 2,4-diethyloctane-1,3-diol, hydroquinone, bisphenol A, bisphenol F, bisphenol B, bisphenol S, 2,2-bis(4-hydroxycyclohexyl)propane, 1,1-, 1,2-, 1,3-, and 1,4-cyclohexanedimethanol, 1,2-, 1,3- or 1,4-cyclohexanediol, and tricyclodecanedimethanol.

Suitable triols and polyols have, for example, 3 to 25, preferably 3 to 18, carbon atoms. Examples include trimethylolbutane, trimethylolpropane, trimethylolethane, pentaerythritol, glycerol, ditrimethylolpropane, dipentaerythritol, ditrimethylolpropane, sorbitol, mannitol, diglycerol, threitol, erythritol, adonitol (ribitol), arabitol (lyxitol), xylitol, dulcitol (galactitol), maltitol or isomalt.

Preferably the compounds of Constituent A 2) are selected from 2-hydroxyethyl acrylate, 2-hydroxyethyl methacrylate, 2-hydroxypropyl acrylate, 2-hydroxypropyl methacrylate, 3-hydroxybutyl acrylate, 3-hydroxybutyl methacrylate, 4-hydroxybutyl acrylate, 4-hydroxybutyl methacrylate, 6-hydroxyhexyl acrylate, 6-hydroxyhexyl methacrylate, 3-hydroxy-2-ethylhexyl acrylate, 3-hydroxy-2-ethylhexyl methacrylate, trimethylolpropane mono- or diacrylate, pentae-rythritol di- or triacrylate, and mixtures thereof.

With particular preference the compounds of Constituent A 2) are selected from the group consisting of 2-hydroxyethyl acrylate, 2-hydroxyethyl methacrylate, 2-hydroxypropyl acrylate, 2-hydroxypropyl methacrylate, 4-hydroxybutyl acrylate and pentaerythritol triacrylate, very preferably from the group consisting of 2-hydroxyethyl acrylate, 2-hydroxyethyl methacrylate, 2-hydroxypropyl acrylate, and 2-hydroxypropyl methacrylate and more particularly it is 2-hydroxyethyl acrylate or 2-hydroxyethyl methacrylate.

### Constituent A 3)

Constituent A 3) is defined as a compound having at least one group that is reactive toward isocyanate groups, and at least one acid group.

Such compound according to Constituent A 3) is at least one, preferably exactly one, compound having at least one, as for example one to three, preferably one or two, more preferably exactly two, groups that are reactive toward isocyanate groups, and having at least one, preferably precisely one, acid group.

The acid groups of the compounds of Constituent A 3) are preferably selected from carboxylic acid groups, sulfonic acid groups, phosphonic acid groups, and phosphoric acid groups. Preference is given to carboxylic acid and sulfonic acid groups, particular preference to carboxylic acid groups.

Suitable compounds having at least one isocyanate-reactive group and also at least one carboxylic acid or sulfonic acid group include, in particular, aliphatic monomercapto, monohydroxy, and monoamino and imino carboxylic acids and corresponding sulfonic acids, such as mercap-toacetic acid (thioglycolic acid), mercaptopropionic acid, mercaptosuccinic acid, hydroxyacetic acid, hydroxypropionic acid (lactic acid), hydroxysuccinic acid, hydroxypivalic acid, dimethylolpropionic acid, dimethylolbutyric acid, hydroxydecanoic acid, hydroxydodecanoic acid, 12-hydroxystearic acid, N-(2'-aminoethyl)-3-aminopropionic acid, hydroxyethanesulfonic acid, hydroxypropanesulfonic acid, mercaptoethanesulfonic acid, mercaptopropanesulfonic acid, aminoethanesulfonic acid, aminopropanesulfonic acid, glycine (aminoacetic acid), N-cyclohexylaminoethanesulfonic acid, N-cyclohexylaminopropanesulfonic acid, or iminodiacetic acid.

Preference is given to dimethylolpropionic acid and dimethylolbutyric acid, particular preference to dimethylolpropionic acid.

### Constituent A 4)

Constituent A 4) is defined as basic compound suitable for neutralization or partial neutralization of the acid groups of the compound A 3).

Suitable basic compounds for complete or partial neutralization of the acid groups of compounds A 3) include organic and inorganic bases, such as alkali metal and alkaline earth metal hydroxides, oxides, carbonates, and hydrogencarbonates, and also ammonia or primary, secondary or tertiary amines. Preference is given to complete or partial neutralization with amines such as with ethanolamine or diethanolamine and in particular with tertiary amines, such as triethylamine, triethanolamine, dimethylethanolamine or diethylethanolamine. The amounts of chemically bonded acid groups introduced, and the extent of neutralization of the acid groups, which is usually 40% to 100% of the equivalent basis, ought preferably to be enough to ensure that the polyurethanes are dispersed in an aqueous medium, this being familiar to the skilled person.

### Constituent A5)

A suitable reactive component according to Constituent A5) acting as photoinitiator is capable of initiating the polymerization of ethylenically unsaturated double bonds upon exposure to UV-radiation.

Suitable photoinitiators are known to the skilled person, examples being those specified in Advances in Polymer Science, Volume 14, Springer Berlin 1974 or in K. K. Dietliker, Chemistry and Technology of UV and EB Formulation for Coatings, Inks and Paints, Volume 3; Photoinitiators for Free Radical and Cationic Polymerization, P. K. T. Oldring (Eds), SITA Technology Ltd, Lond*on.*

Representative examples are mono- or bisacylphosphine oxides, as described for example in EP-A 7 508*,* EP-A 57 474*,* DE-A 196 18 720, EP-A 495 751 or EP-A 615 980, examples being 2,4,6-trimethylbenzoyldiphenylphosphine oxide (Lucirin® TPO (BASF SE)), ethyl 2,4,6-trimethylbenzoylphenylphosphinate (Lucirin® TPO L (BASF SE)), bis(2,4,6-trimethylbenzoyl)phenylphosphine oxide (Irgacure® 819 (BASF SE)), benzophenones, hydroxyacetophenones, phenylglyoxylic acid and its derivatives, or mixtures of these photoinitiators. Examples that may be mentioned include benzophenone, acetophenone, acetonaphthoquinone, methyl ethyl ketone, valerophenone, hexanophenone, α-phenylbutyrophenone, p-morpholinopropiophenone, dibenzosuberone, 4-morpholinobenzophenone, 4-morpholinodeoxybenzoin, p-diacetylbenzene, 4-aminobenzophenone, 4'-methoxyacetophenone, β-methylanthraquinone, tert-butylanthraquinone, anthraquinonecarboxylic esters, benzaldehyde, α-tetralone, 9-acetylphenanthrene, 2-acetylphenanthrene, 10-thioxanthenone, 3-acetylphenanthrene, 3-acetylindole, 9-fluorenone, 1-indanone, 1,3,4-triacetylbenzene, thioxanthen-9-one, xanthen-9-one, 2,4-dimethylthioxanthone, 2,4-diethylthioxanthone, 2,4-diisopropylthioxanthone, 2,4-dichlorothioxanthone, benzoin, benzoin isobutyl ether, chloroxanthenone, benzoin tetrahydropyranyl ether, benzoin methyl ether, benzoin ethyl ether, benzoin butyl ether, benzoin isopropyl ether, 7H-benzoin methyl ether, benz[de]anthracene-7-one, 1-naphthaldehyde, 4,4'-bis(dimethylamino)benzophenone, 4-phenylbenzophenone, 4-chlorobenzophenone, Michler's ketone, 1-acetonaphthone, 2-acetonaphthone, 1-benzoylcyclohexan-1-ol, 2-hydroxy-2,2-dimethylacetophenone, 2,2-dimethoxy-2-phenylacetophenone, 2,2-diethoxy-2-phenylacetophenone, 1,1-dichloroacetophenone, 1-hydroxyacetophenone, acetophenone dimethyl ketal, o-methoxybenzophenone, triphenylphosphine, tri-o-tolylphosphine, benz[a]anthracene-7,12-dione, 2,2-diethoxyacetophenone, benzil ketals, such as benzil dimethyl ketal, 2-methyl-1-[4-(methylthio)phenyl]-2-morpholinopropan-1-one, anthraquinones such as 2-methylanthraquinone, 2-ethylanthraquinone, 2-tert-butylanthraquinone, 1-chloroanthraquinone, and 2-amylanthraquinone, and 2,3-butanedione.

Also suitable are non-yellowing or low-yellowing photoinitiators of the phenylglyoxalic ester type, as described in DE-A 198 26 712*,* DE-A 199 13 353 or WO 98/33761.

Typical mixtures comprise, for example, 2-hydroxy-2-methyl-1-phenylpropan-2-one and 1-hydroxycyclohexyl phenyl ketone, bis(2,6-dimethoxybenzoyl)-2,4,4-trimethylpentylphosphine oxide and 2-hydroxy-2-methyl-1-phenylpropan-1-one, benzophenone and 1-hydroxycyclohexyl phenyl ketone, bis(2,6-dimethoxybenzoyl)-2,4,4-trimethylpentylphosphine oxide and 1-hydroxycyclohexyl phenyl ketone, 2,4,6-trimethylbenzoyldiphenylphosphine oxide and 2-hydroxy-2-methyl-1-phenylpropan-1-one, 2,4,6-trimethylbenzophenone and 4-methylbenzophenone or 2,4,6-trimethylbenzophenone, and 4-methylbenzophenone and 2,4,6-trimethylbenzoyldiphenylphosphine oxide.

Preference among these photoinitiators is given to 2,4,6-trimethylbenzoyldiphenylphosphine oxide, ethyl 2,4,6-trimethylbenzoylphenylphosphinate, bis(2,4,6-trimethylbenzoyl)phenylphosphine oxide, benzophenone, 1-benzoylcyclohexan-1-ol, 2-hydroxy-2,2-dimethylacetophenone, and 2,2-dimethoxy-2-phenylacetophenone.

The compositions of the invention comprise the photoinitiators preferably in an amount of 0.05% to 10.0%, more preferably 0.1% to 8.0%, in particular 0.2% to 5.0%, by weight based on the total amount of components present in the composition.

### Optional Constituents

According to a preferred embodiment the invention relates to a coating composition, which comprises
A) A water-dispersible polyurethane component based on the Constituents A 1) - A 5), as defined above, and the optional constituents based on compounds selected from the group consisting of:
   A 6) Compounds having at least two groups that are reactive toward isocyanate groups, selected from hydroxy, mercapto, primary and/or secondary amino groups;
   A 7) Compounds different from A 2), A 3) and A 4), containing only one group that is reactive toward isocyanate groups; and
   A 8) Di- or polyisocyanates different from A 1).

The optional constituents A 6) comprise within their scope compounds having at least two groups that are reactive toward isocyanate groups, selected from hydroxy, mercapto, primary and/or secondary amino groups. Constituents A 6 ) comprise at least one compound having at least two, as for example 2 to 4, preferably 2 to 3, and more preferably exactly 2 groups that are reactive toward isocyanate groups, these groups being selected from hydroxy, mercapto, and primary and/or secondary amino groups, more preferably from the group consisting of hydroxy groups and primary amino groups, and more preferably hydroxy groups.

Suitable compounds of Constituent A 6) are low molecular weight compounds having a molecular weight of below 500 g/mol, preferably below 400 g/mol, very preferably below 250 g/mol.

The low molecular weight compounds are preferably alcohols that may be aliphatic or cycloaliphatic, preferably aliphatic. The hydroxy groups may preferably be secondary or primary, preferably primary.

Particularly preferred are alcohols having 2 to 20 carbon atoms. Preference is given in particular to hydrolysis-stable, short-chain diols having 4 to 20, preferably 6 to 12, carbon atoms. With very particular preference, the compounds are alkane diols.

Examples of compounds of Constituent A 6) are ethylene glycol, 1,2-propanediol, 1,3-propanediol, 1,1-dimethylethane-1,2-diol, 2-butyl-2-ethyl-1,3-propanediol, 2-ethyl-1,3-propanediol, 2-methyl-1,3-propanediol, neopentyl glycol, neopentyl glycol hydroxypivalate, 1,2-, 1,3- or 1,4-butanediol, 1,6-hexanediol, 1,10-decanediol, bis(4-hydroxy-cyclohexane)isopropylidene, tetramethylcyclobutanediol, 1,2-, 1,3- or 1,4-cyclohexanediol, cyclooctanediol, norbornanediol, pinanediol, decalindiol, 2-ethyl-1,3-hexanediol, 2,4-diethyloctane-1,3-diol, hydroquinone, bisphenol A, bisphenol F, bisphenol B, bisphenol S, 2,2-bis(4-hydroxycyclohexyl)propane, 1,1-, 1,2-, 1,3- and 1,4-cyclohexanedimethanol, 1,2-, 1,3-or 1,4-cyclohexanediol.

Preference is given to ethylene glycol, 1,2-propanediol, 1,3-propanediol, neopentyl glycol, 1,4-butanediol, 1,6-hexanediol, 2,2-bis(4-hydroxycyclohexyl)propane, 1,1-, 1,2-, 1,3- and 1,4-cyclohexanedimethanol, 1,2-, 1,3- or 1,4-cyclohexanediol, and particular preference to ethylene glycol, 1,2-propanediol, 1,3-propanediol, neopentyl glycol, 1,4-butanediol or 1,6-hexanediol.

According to an alternative embodiment, alcohol compounds of Constituent A6) are polyesterdiols having a weight-average molar mass Mw of 700 to 2000, preferably 750 to 1500 g/mol, preferably having an acid number to DIN 53240 of not more than 20 mg KOH/g.

Preferably this is a polyesterdiol synthesized at least partly from aliphatic diol and/or dicarboxylic acid building blocks. Polyesterdiols of this kind have a greater conformative flexibility than those synthesized exclusively from aromatic and/or cycloaliphatic building blocks.

The dicarboxylic acid building blocks may be the free acids or derivatives thereof.

Aliphatic building blocks have only open chains, preferably alkylene chains, whereas cycloaliphatic building blocks have at least one ring system apart from the functional groups. Aromatic building blocks have at least one aromatic ring system apart from the functional groups.

Diols used with preference are ethylene glycol, 1,2-propanediol, 1,3-propanediol, 1,4-butanediol, 1,5-pentanediol, 1,6-hexanediol, and 1,8-octanediol.

Examples of cycloaliphatic diols are 1,2- and 1,3-cyclopentanediols, 1,2-, 1,3-, and 1,4-cyclohexanediols, 1,1-, 1,2-, 1,3- and 1,4-bis(hydroxymethyl)cyclohexanes, 1,1-, 1,2-, 1,3-, and 1,4-bis(hydroxyethyl)cyclohexanes, and bis(4-hydroxycyclohexane)isopropylidene.

Preference is given to 1,2-, 1,3-, and 1,4-cyclohexanediol, 1,3- and 1,4-bis(hydroxy-methyl)cyclohexane, and bis(4-hydroxycyclohexane)isopropylidene.

Examples of aliphatic dicarboxylic acids are oxalic acid, malonic acid, maleic acid, fumaric acid, succinic acid, glutaric acid, adipic acid, pimelic acid, suberic acid, azelaic acid, sebacic acid, undecane-α,ω-dicarboxylic acid, dodecane-α,ω-dicarboxylic acid, and derivatives thereof.

Examples of cycloaliphatic dicarboxylic acids are cis- and trans-cyclohexane-1,2-dicarboxylic acid (hexahydrophthalic acid), cis- and trans-cyclohexane-1,3-dicarboxylic acid, cis- and trans-cyclohexane-1,4-dicarboxylic acid, 1,2-, 1,3-, or 1,4-cyclohex-4-enedicarboxylic acid (tetrahydrophthalic acids), cis- and trans-cyclopentane-1,2-dicarboxylic acid, cis- and trans-cyclopentane-1,3-dicarboxylic acid, and derivatives thereof.

Examples of aromatic dicarboxylic acids are phthalic acid, isophthalic acid, terephthalic acid, and phthalic anhydride; phthalic acid and isophthalic acid are preferred; phthalic acid is particularly preferred.

Preferred polyesterdiols are those polyesterdiols in which diol and/or dicarboxylic acid components or derivatives thereof for their preparation are at least partly aliphatic; preferably, the diol component is entirely an aliphatic component.

The aforementioned compounds of Constituent A 6) are present individually or as mixtures.

The optional constituents A 7) comprise within their scope compounds different from Constituents A 2), A 3) and A 4), containing only one group that is reactive toward isocyanate groups.

This reactive group can be a hydroxy or mercapto group or a primary or secondary amino group. Suitable compounds according to Constituent A 7) are the customary compounds known to the skilled worker, which are used conventionally in polyurethane preparation as stoppers for lowering the number of reactive free isocyanate groups or for modifying the polyurethane properties. Examples include monofunctional alcohols, such as methanol, ethanol, n-propanol, isopropanol, n-butanol etc. Suitable compounds are also amines having one primary or secondary amino group, such as methylamine, ethylamine, n-propylamine, diisopropylamine, dimethylamine, diethylamine, di-n-propylamine, diisopropylamine etc.

The optional constituents A 8) comprise within their scope di- or polyisocyanates different from A1).

In the dispersions of the invention the optional Constituents A 8) are present, which consist of at least one polyisocyanate which is different from the compounds of components A 1) in subordinate amounts.

In one preferred embodiment of the present invention no or no substantial amounts of the additional Constituents A 8) are present in the dispersion. According to a preferred embodiment, the dispersion contains is free of the Constituents A 8).

By "no substantial amount" here is meant that the fraction of the NCO groups of Constituents A 8) as a proportion of the total NCO groups used, from compounds a) and g), is not more than 10, very preferably not more than 5, and more particularly 0 mol%.

The composition according to the invention comprises as Component B) at least one non-ionic dispersing agent selected from the group consisting of:
B 1) Ethoxylated triglyceride;
B 2) Alkylpolyethylene glycol ether of a linear, saturated C₁₆-C₁₈ fatty alcohol; and
B 3) A linear, saturated C₁₂-C₁₄alcohol etherified with a poly-C₂-C₃alkoxy ether.

### Ethoxylated triglyceride B1)

A suitable ethoxylated triglyceride B1) is an emulsifying agent known under the terms poly-alkoxylated or polyethoxylated castor oil.

Castor oil is known as a source of ricinoleic acid, a monounsaturated, 18-carbon fatty acid. Among fatty acids, ricinoleic acid is unusual in that it has a hydroxyl functional group on the 12th carbon. This functional group causes ricinoleic acid (and castor oil) to be more polar than most fats. The chemical reactivity of the alcohol group also allows chemical derivatization that is not possible with most other seed oils.

| Acid name | Average Percentage Range |
|---|---|
| Ricinoleic acid | 95 to 85% |
| Oleic acid | 6 to 2% |
| Linoleic acid | 5 to 1% |
| Linolenic acid | 1 to 0.5% |
| Stearic acid | 1 to 0.5% |
| Palmitic acid | 1 to 0.5% |
| Dihydroxystearic acid | 0.5 to 0.3% |
| Others | 0.5 to 0.2% |

A particularly suitable product is commercially available: HYDROPALAT 3037 (ex Cognis); new designation Dispex®Ultra FA 4437) which consists of polyethoxylated castor oil.

Relevant properties can be summarized as follows: waxy liquid; thaw point: 9.0-11.0°C; density: 1.0220-1.0280 g/cm³; dynamic viscosity: 750.00 mPa x sec.

### Alkylpolyethylene glycol ether of a linear, saturated C₁₆-C₁₈ fatty alcohol B2)

A suitable alkylpolyethylene glycol ether of a linear, saturated C₁₆-C₁₈ fatty alcohol B2) is a known non-ionic surfactant for use in detergents and cleaners.

A particularly suitable product corresponds to the formula

RO(CH₂CH₂O)ₓH (I),

Wherein R represents the alkyl chain of a linear, saturated C₁₆-C₁₈ fatty alcohol; and
x represents the numerals 11, 13, 18, 25, 50 or 80.

The number x in the alphanumeric code indicates the nominal degree of ethoxylation (approximate numbers).

Particularly suitable products are commercially available from BASF SE under the descriptive designation alcohols, C16-C18 ethoxylated according to CAS-Reg.-No. 68439-49-6, such as Lutensol® AT types, such as the specific products, wherein the numerals designate the degree of ethoxylation:
- LUTENSOL AT 18 solution (clear or cloudy, colourless or slightly yellowish liquid)
- LUTENSOL AT 11 and AT 13 (colourless or slightly yellowish waxy cast solids)
- LUTENSOL AT 18, AT 25 E, AT 50 E and AT 80 (colourless or slightly yellowish cast solids).
- LUTENSOL AT 25 Powder, AT 50 Powder, AT 80 Powder (colourless or slightly yellowish cast solids)
- LUTENSOL AT 25 Flakes, AT 50 Flakes, AT 80 Flakes (colourless or slightly yellowish spicular flakes).

Alkylpolyethylene glycol ether of a linear, saturated C₁₆-C₁₈ fatty alcohol are manufactured by causing the fatty alcohol to react with ethylene oxide in stoichiometric proportions.

### Linear, saturated C₁₂-C₁₄alcohol etherified with a poly-C₂-C₃alkoxy ether B3)

A suitable linear, saturated C₁₂-C₁₄alcohol etherified with a poly-C₂-C₃alkoxy ether is particularly a linear, saturated C₁₂-C₁₄ alcohol etherified with a block co-polymer from ethylene oxide and/or propylene oxide.

Particularly suitable products are C₁₂-C₁₄alcohols, ethoxylated, propoxylated (CAS-Reg.-No.: 68439-51-0) and are commercially available from BASF SE under the designation Hydropalat®WE 3120 or HYDROPALAT 120.

Relevant properties can be summarized as follows: colourless to yellowish liquids; boiling point: >100°C; density: 0.975 g/cm³ (20°C); cloud point: ∼29.5°C.

The compositions of the invention comprise the components B) preferably in an amount of 0.05 to 10.0 wt%, more preferably 0.1 to 8.0 wt%, in particular 0.2 to 5.0 wt%, based on the total weight of the composition.

The compositions according to the invention may comprise further customary coatings adjuvants, such as flow control agents, defoamers, UV absorbers, dyes, pigments and/or fillers. Suitable fillers comprise silicates, e.g., silicates obtainable by hydrolysis of silicon tetrachloride, such as Aerosil® from Degussa, siliceous earth, talc, aluminum silicates, magnesium silicates, and calcium carbonates, etc.

Suitable stabilizers comprise typical UV absorbers such as oxanilides, triazines, and benzotriazole (the latter obtainable as Tinuvin® grades from Ciba-Specialty Chemicals, now BASF), and benzophenones. They can be used alone or together with suitable radical scavengers, examples being sterically hindered amines such as 2,2,6,6-tetramethylpiperidine, 2,6-di-tert-butylpiperidine or derivatives thereof, e.g., bis(2,2,6,6-tetramethyl-4-piperidyl) sebacate. Stabilizers are used usually in amounts of 0.1 to 5.0 wt%, based on the "solid" components comprised in the preparation.

The compositons of the invention are prepared by conventional mixing procedures and are particularly suitable as coating material or in coating materials, more preferably for coating substrates such as wood, paper, textile, leather, non-woven, plastics surfaces, glass, ceramic, mineral building materials, such as cement moldings and fiber-cement slabs, and, in particular, for coating metals or coated metals.

The compositions of the invention can be used with particular advantage for coating wood and woodbase materials and wood-containing substrates, such as fiberboard. Also conceivable would be the coating of substrates containing cellulose fiber, such as paper, paperboard, or cardboard, for example. With very particular preference the dispersions are suitable for the coating of oak, spruce, pine, beech, maple, walnut, macoré, chestnut, plane, robinia, ash, birch, stone pine, and elm, and also cork.

The compositions of the invention, after curing by high-energy radiation, advantageously form films having good performance properties, more particularly good hardness with sufficient elasticity and at the same time good grain highlighting.

The substrates are coated in accordance with customary methods that are known to the skilled person, involving the application of at least one dispersion of the invention to the substrate that is to be coated, in the desired thickness, and removal of the volatile constituents of the dispersions, by means of drying and/or evaporation at ambient temperature or elevated temperature up to 60°C, for example.

This process can be repeated one or more times if desired. Application to the substrate may take place in a known way, e.g., by spraying, troweling, knife-coating, brushing, rolling, rollercoating or pouring. The coating thickness is generally situated within a range from about 3 to 1000 g/m² and preferably 10 to 200 g/m².

Optionally, if two or more films of the coating material are applied one on top of another, a radiation cure may take place after each coating operation.

Radiation curing is accomplished by exposure to high-energy radiation, i.e., UV radiation or daylight, preferably light with a wavelength of 250 to 600 nm, or by irradiation with high-energy electrons (electron beams; 150 to 300 keV). Examples of radiation sources used include highpressure mercury vapor lamps, lasers, pulsed lamps (flash light), halogen lamps or excimer emitters. The radiation dose normally sufficient for crosslinking in the case of UV curing is situated within the range from 80 to 3000 mJ/cm².

Irradiation may also, optionally, be carried out in the absence of oxygen, e.g., under an inert gas atmosphere. Suitable inert gases include, preferably, nitrogen, noble gases, carbon dioxide or combustion gases. Irradiation may also take place with the coating material being covered by transparent media. Transparent media are, for example, polymeric films, glass or liquids, e.g., water. Particular preference is given to irradiation in the manner as is described in DE-A1 199 57 900.

In one preferred process, curing takes place continuously, by passing the substrate treated with the preparation of the invention at constant speed past a radiation source. For this it is necessary for the cure rate of the preparation of the invention to be sufficiently high.

This varied course of curing over time can be exploited in particular when the coating of the article is followed by a further processing step in which the film surface comes into direct contact with another article or is worked on mechanically.

The advantage of the dispersions of the invention is that the coated articles can be further processed immediately after the radiation cure, since the surface is no longer tacky. Moreover, the dried film is still so flexible and extensible that the article can still be deformed without the film flaking or rupturing.

The following Examples illustrate the invention:

### Materials and Methods

The additive listed in the Table below is given drop-wise in the weight amounts (based on solids), as indicated, to the water-based UV-radiation curable polyurethane dispersion under stirring with a laboratory stirrer (Dispermat®). 4 wt.-% (based on solids) of the photo-initiator Irgacure®500 are added. The dispersion is stirred for 15 min. with the DISPERMAT stirrer. The wooden substrate is treated with abrasive paper (grain size P 180) and the wood surface is cleaned with an air stream and soft tissue. The coating is applied with a 200 µm draw down bar on the wooden substrate, dried for 15 min. at room temperature and, subsequently, for 30 min. at 60°C in a drying cabinet. The coating film is cured twice by using an IST UV curing device equipped with 2 Hg-lamps at 120 W/cm at 120 W/cm at a conveyer belt speed of 10 m/min. (that corresponds to a total energy dose of 1200 mJ/cm²). The wooden sample is treated with abrasive paper (P 160 grain size), coated, dried and UV-radiation cured in the same way as described above. Grain enhancement, as achieved, is assessed visually with quality grades between 1 (best) and 5 (lowest). Grain enhancement is always compared with a Control Sample (wood substrate coated with a lacquer based on the corresponding radiation curable polyurethane dispersion but *without* having added the additives of the invention).

### Results

**Table 1: Grain enhancement of coatings based on water-based UV-radiation-curable polyurethane dispersions**

| Additive Composition [wt.-%] | Dispersing Agent | | | |
|---|---|---|---|---|
| | Laromer® LR 9005 | LAROMER LR 8983 | LAROMER UA 9064 | LAROMER LR 8949 |
| Control (no additive) | 4.0 (beech) | 4.0 (beech) | 4.0 (beech) | 2.0 (beech) |
| | 4.0 (macoré: mimusops heckelii) | 4.0 (macoré) | 4.0 (macoré) | 2.0 (macoré) |
| Hydropalat®3037¹⁾ 99:1/97:3/95:5 | | | | |
| | 3.0/3.0/2.5 (beech) | 3.0/3.0/2.5 (beech) | 3.0/3.0/2.5 (beech) | |
| Hydropalat®120²⁾ 99:1/95:5 | | | | |
| | 3.5/3.0 (beech) | 3.5/3.0 (beech) | 3.5/3.0 (beech) | 1.5/1.5 (beech) |
| | 3.5/3.0 (macoré) | 3.5/3.0 (macoré) | 3.5/3.0 (macoré) | 1.5/1.5 (beech) |
| Lutensol®AT 18³⁾ 99.5:0.5/95:5 | | | | |
| | 2.0/2.0 (beech) | | | |

| | | | | |
|---|---|---|---|---|
| Rating: Scale from 1 (best) - 5 (worst) | | | | |

## Claims

1. An aqueous radiation curable coating composition, which comprises
A) A water-dispersible polyurethane component based on the constituents:
A 1) At least one aliphatic, cycloaliphatic or aromatic di- or polyisocyanate;
A 2) At least one compound having at least one group that is reactive toward isocyanate groups, and having at least one free-radically polymerizable C=C double bond;
A 3) At least one compound having at least one group that is reactive toward isocyanate groups, and having at least one acid group;
A 4) At least one basic compound suitable for neutralization or partial neutralization of the acid groups of the compound c); and
A 5) A reactive component acting as photoinitiator or the decomposition product thereof;
B) At least one non-ionic dispersing agent selected from the group consisting of:
B 1) Ethoxylated triglyceride;
B 2) Alkylpolyethylene glycol ether of a linear, saturated C₁₆-C₁₈ fatty alcohol; and
B 3) A linear, saturated C₁₂-C₁₄alcohol etherified with a poly-C₂-C₃alkoxy ether;
C) Water.

2. A coating composition according to claim 1, which comprises
A) A water-dispersible polyurethane component based on the Constituents A1) - A5) and the optional constituents based on compounds selected from the group consisting of:
A 6) Compounds having at least two groups that are reactive toward isocyanate groups, selected from hydroxy, mercapto, primary and/or secondary amino groups;
A 7) Compounds different from A 2), A 3) and A 4), containing only one group that is reactive toward isocyanate groups; and
A 8) Di- or polyisocyanates different from A 1).

3. A coating composition according to claim 1, which comprises additional additives selected from the group consisting of diamines, polyamines, reactive diluents and customary coating additives.

4. A coating composition according to claim 1, which comprises as dispersing agent
B 1) Ethoxylated castor oil.

5. A coating composition according to claim 1, which comprises as dispersing agent
B 2) An alkylpolyethylene glycol ether of a linear, saturated C₁₆-C₁₈ fatty alcohol of the formula
RO(CH₂CH₂O)ₓH (I),
Wherein R represents the alkyl chain of a linear, saturated C₁₆-C₁₈ fatty alcohol; and
x represents the numerals 11, 13, 18, 25, 50 or 80.

6. A coating composition according to claim 1, which comprises as dispersing agent
B 3) A linear, saturated C₁₂-C₁₄ alcohol etherified with a block co-polymer from ethylene oxide and/or propylene oxide, optionally admixed with dispersable silicone oil.

7. A coating composition according to claim 1, which comprises
A) A water-dispersible polyurethane component based on the constituents:
A 1) At least one aliphatic di- or polyisocyanate; and
A 2) At least one compound having at least one group that is reactive toward isocyanate groups, and at least one free-radically polymerizable C=C double bond.

8. A coating composition according to claim 1, which comprises
A) A water-dispersible polyurethane component based on the constituents:
A 1) At least one aromatic di- or polyisocyanate; and
A 2) At least one compound having at least one group that is reactive toward isocyanate groups, and at least one free-radically polymerizable C=C double bond.

9. A coating composition according to claim 1, wherein the constituent A 2) is selected from 2-hydroxyethyl acrylate, 2-hydroxyethyl methacrylate, 2-hydroxypropyl acrylate, 2-hydroxypropyl methacrylate, 3-hydroxybutyl acrylate, 3-hydroxybutyl methacrylate, 4-hydroxybutyl acrylate, 4-hydroxybutyl methacrylate, 6-hydroxyhexyl acrylate, 6-hydroxyhexyl methacrylate, 3-hydroxy-2-ethylhexyl acrylate, 3-hydroxy-2-ethylhexyl methacrylate, trimethylolpropane monoacrylate or diacrylate and pentaerythritol diacrylate or triacrylate and mixtures thereof.

10. A coating composition according to claim 1, wherein the constituent A 3) is selected from the group consisting of dimethylolpropionic acid and dimethylolbutyric acid.

11. A substrate coated with a coating composition according to any one of claims 1 to 10.

12. The substrate according to claim 11, comprising wood material selected from the group consisting of coated oak, spruce, pine, beech, maple, chestnut, plane, robinia, ash, birch, stone pine, elm, walnut, macoré and cork.

13. A method for coating a substrate, wherein a coating composition according to any one of claims 1 to 10 is applied to a substrate, subsequently dried and radiation-cured.

14. The use of a coating composition according to any one of claims 1 to 10 as a coating material for substrates.

15. The use according to claim 14, wherein the coating material is used to coat a substrate selected from the group consisting of wood, paper, textile, leather, non-woven, plastic surfaces, glass, ceramics, mineral building materials, metals, coated metals, paper, paper board and card board.

16. The use according to claim 15, wherein the coating material is used to coat wood material selected from the group oak, spruce, pine, beech, maple, chestnut, plane, robinia, ash, birch, stone pine, elm, walnut, macoré and cork.
